# EUROPEAN PATENT APPLICATION

(11) **EP 2 302 599 A1**
(43) Date of publication of application: **30.03.2011**
(21) Application number: 09382172.6
(22) Date of filing: 21.09.2009
(51) Int. Cl.: G07D 7/00, H04N 1/00

(54) **Digital watermarks recognition method using mobile phones**

(71) Applicant: Aquamobile, S.L., 28010 Madrid (ES)
(72) Inventor: Gonzalez Alvarez, Javier, 28010 MADRID (ES); Mateus Fernandez, Fernando, 28010 MADRID (ES); Velazquez Cuellar, Francisco Miguel, 28010 MADRID (ES)
(74) Representative: Temino Ceniceros, Ignacio

(57) **Abstract**

Recognition method for digital watermarks using mobile phones, of the type implemented in a client-server type architecture; which is **characterized in that** it includes at least the following processes: a first process (200) of watermark imbedding onto a printed image; a second process (300) of reading the watermark imbedded in the previous process; and a third process (400) of resolution or translation of the digital watermark.

## Description

The purpose of this invention is to present a new method, which based on the use of invisible codes such as digital watermarks imbedded in any printed material, enables to quickly and easily recognize it using mobile communication devices that enable to facilitate the access to information and contents previously associated to these watermarks, developing applications that increase security protection of the contents and making the printed material interactive, being able to use these watermarks for multiple applications.

The objective of the method used in this invention is to facilitate mobile transactions and increase the range of possibilities offered by the mobile devices taking advantage of their characteristics, which are increasingly more advanced as far as functionality, connectivity and usability, while promoting the presence of digital contents on the Internet, since this method ensures, thanks to the watermarks, the tracking of these contents.

### Background of the invention

The recognition of watermarks from mobile communication devices is a new segment offered by mobile services of added value, which has not yet been categorized in a definitive way. However, ever more frequently, new interaction tools are being used of which the following are highlighted: visual search, mobile tagging, print-to-web tools and content discovery tools. However, all these tools end up being reduced to two basic technologies:
- Remote image recognition.
- Bi-dimensional bar codes.

The recognition of images is based on the recognition of certain pixel combination patterns. Basically, the company that offers the services maintains a large database with a multitude of images. When the user identifies an image he wishes to interact with, he takes a picture of this image and sends it via MMS to a short number administered by the company. The company receives the message in their servers, searches for the corresponding image in their database and verifies the information that must be sent back to the user (associated content). The advantages provided by this technology is summarized as not requiring pre-installed software on the phone and also, in theory, operates with any commercial terminal, independent of its technical characteristics. Additionally, it does not require manipulation of the image and is easily implemented by the client company.

There are also several disadvantages of this technology. First off, the image is identified remotely; therefore, in the case there is a problem with the identification, the user has made a payment through the MMS, which does not produce the desired result. Another problem is that in a realistic way, not all the cameras on the market are able to offer the level of detail required for the service to function properly in a universal way. It is true that cameras installed on mobile phones are achieving better quality and definition, which benefits the use of these technologies; but in general, this problem still persists if a certain universality of the service is thought. Finally, this technology requires the sending of a MMS/SMS, so the experience of the user is not really altered. A certain degree of user delectation is lost; also, the sending of images via mobile is usually more expensive than sending normal text.

The bi-dimensional bar codes have been the object of various initiatives for generating a new mobile line of communication. Bi-dimensional bar codes have predominated over others in the industry and have become the best tool for personalizing the information that is going to be detected. For this detection, the mobile terminals are equipped with special software. The advantages they provide stem from their open code and their easy identification. However, the use of this open code makes it inadequate for use in high security environments. Additionally, it is bothersome because it dirties the image and requires a different reader depending on the company that offers the service and hinders the development of massive services.

Compared to these technologies, the digital watermarks offer an easy and efficient way of assuring digital protection of printed material, as occurs with audio and video files. Watermarks are data inserted directly into the content, imperceptible for humans but recognizable by artificial vision equipment. They can be recognized by hardware as well as software enabled for this purpose, providing copyright information, authentication, tracking, monitoring, increased security or permissibility of access to additional information and to the mobile business.

However, there are no known systems or methods that enable to identify these watermarks using mobile phone terminals, which would allow for a quick recognition of these watermarks and almost instantly have the data supplied by these marks available, facilitating their use in diverse fields like in security or advertising.

### Description of the invention

The method of recognizing digital watermarks using mobile phones, which is the subject matter of this invention, is a method that uses and identifies digital watermarks, whose main attributes must be:
- Discretion: The watermarks are not visible, which enables the media, advertisers or any person or company that uses such watermarks, to make their images interactive without sacrificing any visible space of the image.
- Security: The encrypting of the water marks follows a proprietary system, which guarantees its security.
- Ease of use: The use of watermarks is very much extended throughout various fields, guaranteeing that a large number of clients will be able to integrate the encryption easily and quickly.

It is interesting to note that terminals still exist in the market that do not incorporate a digital camera, or have cameras that do not meet the required specifications. For this, the method implements a solution that allows interacting with client services. This solution entails the insertion of a text in a field supplied for this purpose, which is associated to a specific content in the platform or system that comprises the service. This solution provides two functionalities:
(a) As an alternative to the detection of a watermark, using the key word that appears below the identification symbol of the interactive images as text.
(b) As an internet search engine, offering the search results related to the word that the user decides to insert in the text field.

The system where the method is implemented is an on-line platform of intelligent water marking of images and key words as well as the generation of contents for mobiles associated to these images; and also the software for mobile terminals to enable them for this interaction.

The main function of the system is to convert the interactive image; which afterwards, enables the interaction of users with mobile watermark or key words recognition applications to connect with associated contents. To perform this function, the system includes three operations that are independent of each other:
- Digital watermark, where a digital watermark is inserted throughout the entire image.
- Key word, where a key word is generated for this image and the stamp on it.
- Website mobile, which enables to personalize and generate online content associated to each image.

For this, and in a more specific way, the method of this invention includes the following stages:
(i) a first process of imbedding a watermark into a printed image, where said process is configured for the analysis and marking of this printed image, establishing the marking as a code directly related with an associated and defined content by the user;
(ii) a second process of reading the watermark that was imbedded in the previous process, where this reading is materialized in a mobile communications terminal, also with the reading process configured for detection, reading and sending of watermark data to a server; and
(iii) a third digital watermark resolution or translation process, where this process is configured so that the data received from the second reading process is associated with the user defined contents; returning these associated contents to the user.

The novelty of this method lies in the application of watermark technology in mobile devices, providing the images with links to contents on the mobile Internet, through the application of digital watermarks and their later recognition by these terminals, which are provided with cameras.

For terminals that do not have cameras, the users are provided with a tool, which allows sending a key word that enables to substitute the functionality of the camera.

In summary, a digital watermark consists in a plurality of digital data that is encrypted and imbedded in an image, audio, video and other types of digital files, and the method proposed in this invention, inserts this encrypted data by making subtle changes to the original information. The modifications of the original content data are produced by following a powerful mathematical algorithm; in this way enabling to decode it afterwards, while always remaining unintelligible to the human eye.

The devices prepared for performing the scanning of contents that include digital watermarks can encrypt the imbedded data when they incorporate the detection and specific encryption media described in this patent. This enables to identify the type of content, decrypting the information and providing an adequate response like for example, secure the WEB/WAP address to which the user must be re-directed depending on the content scanned by the terminal.

The decrypting of code included in the files, for example an image, facilitates the authentication of printed material, commercial transactions, proximity authenticators, or multi-media content downloader, contact forms, WML pages, etc. There is a very wide array of actions that may be performed afterwards.

### Brief description of the figures

The following, in a brief way describes a series of drawings that help to better understand this invention. These drawings are expressly related to the embodiment of this invention and provide an illustrated example that is not intended to limit this invention.
FIG. 1 shows a view of an image, where fig. 1A shows the original image, fig. 1B shows the image of the digital watermark signal and fig. 1C shows the original image with the digital watermark information.
FIG. 2 shows a flow diagram of the sub-process of imbedding the digital watermark into a printed element.
FIG. 3 shows a flow diagram of the sub-process of reading the digital watermark of a printed element.
FIG. 4 shows a flow diagram of the sub-process of translating the digital watermark of a printed element.

### Preferred embodiment of the invention

In a practical embodiment of this invention, the insertion of watermarks in a digital image consists in the insertion of digital data by altering the luminosity values of the pixels that make up the image file.

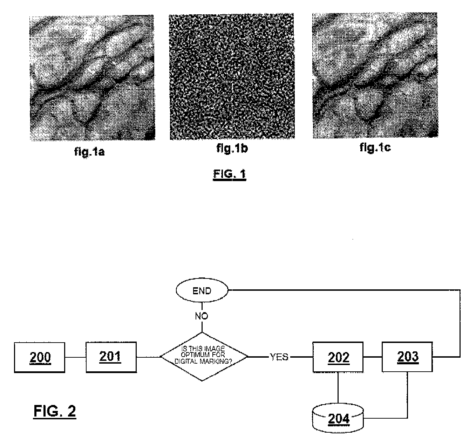

In a digital image, as shown in **FIG.1****,** the colour spectrum equates to the luminosity values of the different channels that comprises an image. In this case, in an image that is going to be printed, the information of the CMYK channels determines the luminosity, colour and density values. The insertion of digital watermarks is performed as a previous step to printing the image, and after performing all the adjustments in size, colour and necessary touch-ups.

The sub-process of inserting a watermark or imbedding stage 200 is defined as the set of activities which result in a file that is digitally marked optimally for its detection afterwards. This process can be performed in a manual or automatic way, depending on the use that is going to be given to this watermark.

This first watermark 200 imbedding process shown in **FIG.2** also encompasses the following stages:
(i) a first analysis stage 201 configured for analyzing the digital content, identify the type of marking to be performed and establish parameters for the different regions susceptible of being marked, where the ideal image parameters avoid the pure whites and blacks because these are the least efficient conditions for executing the encrypting and marking algorithm.
(ii) a second generation stage 202 configured for creating a watermark with adequate parameters of identification, strength and security.
(iii) a third marking stage 203 configured for marking the content on the image itself, saving storing the result in a database 204 of marked images, along with the generation 202 data, so that this data is stored together for their use afterwards.

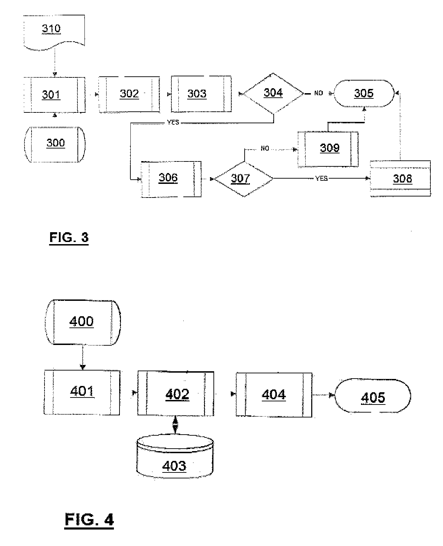

These stages are configured so that once the file is digitally marked; the watermark that undoubtedly identifies it can be detected in the second watermark reading stage 300 shown in detail in **FIG.3****.**

It is necessary to point out that between the analysis stage 201 and the generation stage 202, it must be ensured that the digital image is optimum for the digital marking. The images selected for imbedding a watermark must meet the following technical characteristics:
- Size. The image must be delivered in its final size. The minimum size that a printed image must have in order to properly read the watermark is 50x50 mm.
- Resolution. The images must be delivered at a minimum of 300dpi for optimum marking.
- Colour space. It must be a CMYK, RGB or grey scale image. The images that have a different colour space must first be converted to any of the allowed ones.
- Image characteristics. The image must have a certain visual noise so that is does not have a flat tone range. The images with a wide variety of medium tones notably optimize the imbedding of watermarks process.

This second watermark reading process 300, which is shown in detail in FIG.3, is configured for the detection and reading of watermarks and also encompasses the following stages:
(i) a first capturing stage 301 configured for capturing the content 310 using any mobile device that is equipped with a digital camera;
(ii) a second adaptation stage 302 configured to adapt and optimize its detection afterwards;
(iii) a third pre-detection stage 303 where the mark 304 is or isn't identified and where in case it isn't, 305 ends the reading stage 300; and if it is identified, it passes to a fourth detection stage 306 configured for data extraction using the corresponding mathematical algorithms;
   and this fourth detection stage 306, evaluates if the reading of data 307 is correct or not; if correct, the data 308 is extracted and if not correct, the errors 309 are managed; with both these stages, this second watermark reading process 300 is ended.

The watermark reading process 300, unlike the imbedding process 200 that is performed in a server, is materialized in an application implemented in the users mobile phone, since it is here precisely where through the telephones own camera, the digital watermark image is captured; and after executing the reading process 300 we have the data ready for sending to a third process of resolution or translation of the digital watermark 400.

This digital watermark resolution or translation process 400 is shown in detail in **FIG.4** and is configured so that the data contained in the detected watermark is translated to the associated content. This process also encompasses the following stages:
(i) a first reception stage 401 where the code provided by the second reading process 300 is received and the basic parameters such as the id of scanned content or geographic content such as the country of origin are identified.
(ii) a second translation stage 402, where the code is identified with the associated content in a database 403, being this database a replica of database 204 of the first marking process 200;
(iii) a third redirection of content stage 404 configured for sending the associated content response to the reading device with the content associated to the scanned image;
   and where the 405 process is finalized once the content is redirected.

As made clear by the description, the system that supports the method has client-server type architecture, where the first process 200 and the third process 400 are implemented in servers enabled for this purpose with means configured for implementing these processes. On the other hand, the reading process 300 is implemented in a mobile communication device, preferably a mobile phone equipped with camera, even though this is not an obstacle for substituting the image photography with the watermark by sending a code identifier in a second preferred embodiment.

### Invention application examples.

In a typical example of application, a user uploads an image to the marking server so that this server can use this image to digitally mark it (first marking process 200) and then send it to friends afterwards as a post card.

These friends, via their mobile phones and thanks to the marked post card (second reading process), will have access to the images and videos of their vacation and other content that has been associated on the translation server by the user (third translation process 400). The return provided by the server does not have to be the content itself; it can be a link to a secure site (https type for example), where his friends can download these contents if they so desire.

As a second example of how to apply this invention, a user views a sports paper and reads a news bit about his favourite football team, which is illustrated with a photograph of the centre forward scoring a goal. The user focuses on the photograph using his mobile phone and automatically receives the video of the complete play in his mobile since this is the content associated to the watermark inserted in the sports paper photograph.

Other applications would lie in the start of a mobile banking session without needing to key the URL of the bank and with additional security measures to those that already exist, or applications redirecting to protected places on the Internet.

In general, there are a large number of possible applications for this technology, being the following sequence common to all uses:
- An image is printed with an encrypted watermark.
- This image is read by the terminals capable of performing the second reading process 300 just as described above.
- When read, the second reading process 300 connects to the server where the third translation process 400 is implemented.
- The content associated to each image is returned to the user's mobile terminal.

## Claims

1. Recognition method for digital watermarks using mobile phones, of the type implemented in a client-server type architecture; **characterized in that** it includes at least the following processes:
(i) a first process (200) of imbedding a watermark into a printed image, where said process is configured for the analysis and marking of this printed image, establishing the marking as a code directly related with an associated and defined content by the user;
(ii) a second process (300) of reading the watermark that was imbedded in the previous process, where this reading is materialized in a mobile communications terminal, also with the reading process (300) configured for detection, reading and sending of watermark data to a server; and
(iii) a third digital watermark resolution or translation process (400), where this process is configured so that the data received from the second reading process (300) is associated with the user defined contents; returning these associated contents to the user.

2. Method according to claim 1 **characterized in that** the first watermark imbedding process (200) includes the following stages:
(i) a first analysis stage (201) configured for analyzing the digital content, identify the type of marking to be performed and establish parameters for the different regions susceptible of being marked, where the ideal image parameters avoid the pure whites and blacks **in that** these are the least efficient conditions for executing the encrypting and marking algorithms;
(ii) a second generation stage (202) configured for creating a watermark with adequate parameters of identification, strength and security; and
(iii) a third marking stage (203) configured for marking the content on the image itself, storing the result in a database (204) of marked images, along with the generation data (202), so that this data is stored together for their use afterwards;
where these stages are configured so that once the file is digitally marked, the watermark that undoubtedly identifies it can be detected in the second watermark reading stage (300).

3. Method in accordance with claim 2 **characterized in that** between the analysis stage (201) and the generation stage (202), it is verified whether or not the image is optimum for the digital marking; a digital image is defined as being optimum when its size is greater than 50x50mm and its resolution is greater than 300dpi; additionally, it must be a CMYK, RGB or grey scale image.

4. Method according to the prior claims **characterized in that** the second watermark reading process (300) includes the following stages:
(i) a first capturing stage (301) configured for capturing the content (310) using any mobile device that is equipped with a digital camera;
(ii) a second adaptation stage (302) configured to adapt and optimize its detection afterwards;
(iii) a third pre-detection stage (303) where the mark (304) is or isn't identified and where in case it isn't, (305) ends the reading stage (300); and if it is identified, it passes to a fourth detection stage (306) configured for data extraction using the corresponding mathematical algorithms;
and this fourth detection stage (306), evaluates if the reading of data (307) is correct or not, and if correct, the data (308) is extracted and if not correct, the errors (309) are managed; with both these stages, this second watermark 300 reading process is ended.

5. Method according to the prior claims **characterized in that** the third watermark resolution or translation process (400) includes the following stages:
(i) a first reception stage (401) where the code provided by the second reading process (300) is received and the basic parameters are identified;
(ii) a second translation stage (402) where the code is identified with the content associated to a database (403);
(iii) a third redirection of content stage (404) configured for sending the associated content response to the reading device with the content associated to the scanned image;
and where the process (405) is finalized once the content is redirected.

6. Method according to prior claims **characterized in that** the database (403) is a replica of database (204) of the first marking process (200).

7. Method according to claim 1 **characterized in that** the watermark reading process (300) is materialized through a text code inserted in the image.

8. Recognition system for digital watermarks using mobile phones, of the type implemented in a client-server type architecture and configured for implementing the method of claims 1 through 6, **characterized in that** it includes:
(a) a first server element that includes configured means for implementing the digital watermark imbedding process (200) and accessible to the user via WEB, which has been configured for defining the contents associated to the watermark and storing them in a database (204);
(b) a second mobile communication element configured for implementing the reading process (300) for a digital watermark imbedded in a printed image and sending this reading data to a third server element; and
(c) a third server element that includes configured means for implementing the translation process (400) for the data received from the mobile communication element and associate this data with the data stored in a database (403);
where the data of database (204) of the first server is replicated in the database (403) of the second server.
